# EUROPÄISCHE PATENTSCHRIFT

(11) **EP 1 291 509 B1**
(45) Veröffentlichungstag und Bekanntmachung des Hinweises auf die Patenterteilung: **18.10.2006**
(21) Anmeldenummer: 02019143.3
(22) Anmeldetag: 30.08.2002
(51) Int. Cl.: F02D 9/04

(54) **Ventilkomponentensatz für interne Bypass-Strömung**
Valve assembly having an internal bypass flow
Ensemble soupape ayant un écoulement bypass interne

(30) Priorität: 31.08.2001 DE 10144293
(43) Veröffentlichungstag der Anmeldung: 12.03.2003
(73) Patentinhaber: SIEMENS AKTIENGESELLSCHAFT, 80333 München (DE)
(72) Erfinder: Rother Marc, 50968 Köln (DE); Joussen Andre, 50858 Köln (DE)

(56) Entgegenhaltungen:
- WO-A-99/54612
- DE-A- 4 310 538
- FR-A- 2 606 115
- GB-A- 1 383 881
- US-A- 3 693 935
- US-B1- 6 178 744
- PATENT ABSTRACTS OF JAPAN vol. 2000, no. 03, 30. März 2000 (2000-03-30) -& JP 11 351416 A (AISAN IND CO LTD), 24. Dezember 1999 (1999-12-24)
- PATENT ABSTRACTS OF JAPAN vol. 1997, no. 07, 31. Juli 1997 (1997-07-31) -& JP 09 072446 A (KUBOTA CORP), 18. März 1997 (1997-03-18)

## Beschreibung

Die Erfindung betrifft einen Ventilkomponentensatz zum Verschließen eines Innenkanals, der in einer Strömungsleitung angeordnet ist, mit einer Klappe, die mit einer Welle verbunden ist, mit einer Lagervorrichtung für die Welle und mit einem Gehäuse, wobei die Welle Mittel zur Positionierung der Klappe gegenüber dem Innenkanal aufweist. Ein solcher Ventilkomponentensatz eignet sich insbesondere zur Steuerung oder Regelung von Abgasströmen in einem mobilen Abgasreinigungssystem.

Angetrieben durch immer schärfere Abgasbestimmungen wurde insbesondere für Personenkraftwagen die Entwicklung von Abgasrückführungssystemen vorangetrieben. Grundsätzlich hat ein derartiges System die Aufgabe eine bestimmte Menge des in einer Verbrennungskraftmaschine erzeugten Abgases in ein bereitgestelltes Luft-Treibstoff-Gemisch einzuleiten, um auf diese Weise eine Reduzierung der gebildeten Stickoxide zu erreichen. Beim Verbrennungsprozess werden Kohlenwasserstoffe, wie sie beispielsweise in Benzin, Diesel oder dergleichen enthalten sind, mit dem Sauerstoff der Luft in Kohlendioxid und Wasser umgewandelt. Dabei reagiert allerdings auch der in der Luft enthaltene Stickstoff mit dem Sauerstoff, wobei Stickoxide entstehen. Dabei ist es bekannt, dass bei niedrigeren Temperaturen bei der Verbrennung weniger Stickoxide entstehen. Die Folgen einer hohen Stickoxidemission sind beispielsweise eine geringere Effizienz der Verbrennungskraftmaschine und eine erhöhte Luftverschmutzung. Aufgrund der Tatsache, dass das in die Verbrennungskraftmaschine erneut eingeleitete Abgas einen geringeren Sauerstoffgehalt enthält, steigt insgesamt der Inertgasanteil im Verbrennungsraum und die Verbrennung verlangsamt sich unter Absenkung der Stickoxid-Emission. Führt man beispielsweise ca. 10 % des Abgasstromes wieder in die Verbrennungskraftmaschine zurück, lässt sich eine Stickoxidabsenkung von ca. 30 % erreichen.

Allerdings hat sich herausgestellt, dass eine Zugabe von Abgas in Abhängigkeit der thermischen und/oder thermodynamischen Bedingungen im Brennraum der Verbrennungskraftmaschine zu erfolgen hat, um einerseits einen hohen Wirkungsgrad der Verbrennung und andererseits eine geringe Stickoxidemission zu erzielen. Da die im Brennraum während der Verbrennung herrschenden Temperaturen einen wesentlichen Einflussfaktor betreffend die Stickoxid-Emission darstellen, ist es auch bekannt, das zurückgeführte Abgas vor dem Einleiten in das Luft-Treibstoff-Gemisch aktiv zu kühlen, und auf diese Weise die Temperatur im Brennraum zu senken.

Um derartige Regulierungsmöglichkeiten zu gewährleisten, sind Abgassysteme entwickelt worden, die mehrere Abgasrückführungsleitungen aufweisen. Dabei wird das zurückzuführende Abgas in Abhängigkeit des Betriebszustandes der Verbrennungskraftmaschine direkt zu dem Ansaugrohr zurückgeführt oder zunächst über einen anderen Strang des Abgassystems zu einem Kühler geführt, in dem die Temperatur des Abgases gesenkt wird, um anschließend dieses gekühlte Abgas der Verbrennungskraftmaschine zuzuführen. Die Regulierung der zurückzuführenden Abgasströme hinsichtlich der Weiterleitung in verschiedene Abgasrückführungsstränge zu vorgebbaren Zeitpunkten erfolgt mit Doppelklappen, wie sie beispielsweise aus der DE 44 26 028 bekannt sind.

Die DE 44 26 028 betrifft ein Abgasklappensystem für eine mehrsträngige Abgasanlage. In den beiden Abgassträngen ist jeweils eine Abgasklappe vorgesehen, wobei beide Abgasklappen eine gemeinsame Schwenkachse aufweisen, und die beiden Abgasklappen um 90° gegeneinander verdreht angeordnet sind. Die beiden Abgasstränge können somit wechselweise durch die Abgasklappen verschlossen bzw. freigegeben werden. Dabei ist es besonders vorteilhaft, dass das Abgas während einer Kaltstartphase der Verbrennungskraftmaschine ungekühlt zugeführt wird, da dieses in der Kaltstartphase bekannterweise eine geringere Temperatur aufweist. Nach der Kaltstartphase wird das zurückzuführende Abgas durch einen Strang mit einem Abgaskühler (Wärmetauscher) geleitet, um die oben beschriebenen positiven Effekte in Hinblick auf die Stickoxidemission zu erzielen. Die Abgaskühler sind dabei bekanntermaßen so aufgebaut, dass sie den jeweiligen Abgasstrang umschließen, wobei ein Kühlmittel, wie beispielsweise Wasser oder Luft, von diesem durchströmt wird.

Da eine solche mehrsträngige Abgasrückführungsleitung relativ viel Platz benötigt, was insbesondere in Hinblick auf die Anordnung einer solchen Abgasrückführungsleitung im Motorraum eines Personenkraftwagens Probleme verursacht, wurden neue Abgaskühler entwickelt. Diese Abgaskühler zeichnen sich dadurch aus, dass sie in ihrem Inneren zweisträngig aufgebaut sind, wobei das den Abgaskühler durchströmende Abgas in einem Strang gekühlt wird, während es in einer anderen Leitung ungekühlt hindurchgeführt wird. Solche neuen Abgaskühler weisen im Zentrum einen Innenkanal auf, der bevorzugt konzentrisch von einer ringförmigen Strömungsleitung umgeben ist. Die ringförmige Strömungsleitung steht im wärmeleitenden Kontakt mit einem äußeren Mantel, von außen mit einem Kühlmedium umspült wird. Folglich wird das Abgas beim Durchströmen der Strömungsleitung gekühlt. Wird das Abgas über den Innenkanal zurückgeführt, behält dieses seine Temperatur im wesentlichen bei, da ein direkter und wärmeleitender Kontakt zur Mantelfläche der Strömungsleitung unterbunden ist.

Aus der DE 43 10 538 A und der US-B1-6 178 744 ist ein Ventilkomponentensatz der eingangs genannten Art bekannt.

Aus der JP 11 35 14 16 A ist ein Klappenventil der eingangs genannten Art bekannt. Dabei ist der Querschnitt der Teile der Welle, die in kreisrunden Ausnehmungen im Mantelrohr des Durchflußkanals drehbar gelagert sind, oval ausgebildet. Über einen Zufuhrschlitz, der eine Breite entsprechend der geringsten Breite des Ovals besitzt, ist die Welle in die kreisrunde Ausnehmung im Mantelrohr einführbar und in ihre Arbeitsposition verdrehbar. In dem Bereich ihrer Arbeitsposition ist die Welle über die größte Erstreckung ihres Ovals drehbar in der Ausnehmung im Mantelrohr geführt.

Aus der WO 99/54612 A ist eine in einer Abgasleitung eines Fahrzeugs mit Brennkraftmaschine angeordnete Bremsvorrichtung bekannt, die eine auf einer drehbaren Welle angeordnete Klappe aufweist, durch die ein Durchtrittskanal absperrbar ist.

Aus der US-A-3 693 935 ist eine einseitige Lagerung einer Drosselklappenwelle in einer Abgasleitung eines Verbrennungsmotors bekannt. Dabei besteht der Lagerkörper zur Lagerung der Drosselklappenwelle aus einer Hohlschraube, die in eine Gewindebohrung in der Wand der Abgasleitung einschraubbar ist.

Hiervon ausgehend ist es Aufgabe der vorliegenden Erfindung, Mittel zur Steuerung bzw. Regulierung von Fluidströmen anzugeben, so dass eine unterschiedliche Anströmung von zwei zueinander konzentrisch angeordneten Strömungskanälen gewährleistet wird. Diese sollen dabei möglichst einfach aufgebaut, montagefreundlich (insbesondere in Hinblick auf die Nachrüstung und Kombination derartiger neuer Abgaskühler bei bekannten Abgasrückführungsleitungen) und preiswert ausgeführt sein.

Diese Aufgaben werden gelöst durch einen Ventilkomponentensatz mit den Merkmalen des Anspruchs 1. Weitere vorteilhafte Ausgestaltungen der Erfindung, welche einzeln oder in Kombination miteinander eingesetzt werden können, sind Gegenstand der jeweils abhängigen Ansprüche.

Die mindestens eine Nut dient zur Positionierung gegenüber dem Mantelrohr, wobei dieses zumindest teilweise in die Nut eingreift. Auf diese Weise wird eine exakte Ausrichtung der Klappe gegenüber dem den Innenkanal begrenzenden Mantelrohr sichergestellt, so dass insbesondere Montagetoleranzen oder Fertigungstoleranzen ausgeglichen werden, wie sie beispielsweise in Hinblick auf die konzentrische Anordnung des Mantelrohres gegenüber der Strömungsleitung oder aber der Welle bezüglich der Lagerung im Gehäuse auftreten.

Die Aussparung, die bevorzugt als Langloch ausgeführt ist, dient dabei zumindest abschnittsweise als Anlagefläche für die Welle. Diese anliegenden Abschnitte sollten jedoch kleiner als 50 %, insbesondere kleiner als 30 %, vorzugsweise kleiner als 10 % des Umfangs der Welle ausmachen, um gegebenenfalls unterschiedliches thermisches Ausdehnungsverhalten der Welle gegenüber dem Mantelrohr zu gewährleisten. Auch kann es unter Umständen vorteilhaft sein, dass eine gewisse Bewegungsfreiheit der Welle in der Aussparung ermöglicht wird, so dass Verunreinigungen wie Rußpartikel, Asche oder dergleichen, die sich während des Betriebes einer solchen Abgasrückführungseinrichtung in der Aussparung festsetzen können, aufgrund dieser Relativbewegung wieder gelöst werden. Dadurch wird insbesondere eine Beeinträchtigung der Rotationsfreiheit der Welle durch Verklebung verhindert.

Hinsichtlich der Ausgestaltung der Aussparung als Langloch sei noch darauf hingewiesen, dass die offene Seite des Langloches bevorzugt in entgegengesetzte Richtung zur Strömungsrichtung angeordnet ist, so dass die Welle stets mit dem durchströmenden Fluid in die Aussparung hineingedrückt wird. Ungeachtet dessen besteht jedoch die Möglichkeit, derartige Ventilkomponentensätze auf der Eintrittsseite oder auf der Austrittsseite des Innenkanals anzuordnen. Wird der Ventilkomponentensatz mit einem Abgaskühler verbunden, wie er oben beschrieben ist, so hat die Anordnung auf der Abgaseintrittsseite den Vorteil, dass an dieser Stelle das rückzuführende Abgas noch eine sehr hohe Temperatur aufweist, so dass Verschmutzungen oder beispielsweise Kondensation nahezu vermieden werden können. Allerdings führt die hohe Temperatur des rückzuführenden Abgases zu einer hohen thermischen Beanspruchung des Ventilkomponentensatzes, so dass es unter Umständen auch vorteilhaft sein kann, diesen auf der Fluidaustrittsseite anzuordnen. In diesem Fall sind eventuell besonders geformte Aussparungen zu verwenden, die ein Herausdrücken der Welle verhindern, oder es können zusätzliche Sicherungsmaßnahmen getroffen werden.

Die Klappe hat eine Fläche, die kleiner als der freie Strömungsquerschnitt der Strömungsleitung ist und im Wesentlichen dem Querschnitt des Innenkanals entspricht, so dass mittels der Klappe der Innenkanal geöffnet oder geschlossen werden kann, wobei der Strömungsquerschnitt variiert wird. Ein solcher Ventilkomponentensatz kann auch nachträglich exakt zu einem anschließenden Bauteil (wie beispielsweise einem Abgaskühler mit interner Bypass-Strömung oder der Abgasrückführungsleitung) ausgerichtet werden, wobei zusätzlich Montagefehler vermieden werden. Außerdem ist gewährleistet, dass geringe Abweichungen hinsichtlich der Positionierung der Ventilklappe zum Innenkanal, wie sie beispielsweise infolge von Fertigungstoleranzen auftreten, ausgeglichen werden können.

In Hinblick auf eine gleichmäßige Verteilung des durchströmenden Fluids ist es vorteilhaft, dass der Innenkanal zur Strömungsleitung im wesentlichen konzentrisch angeordnet ist. Auf diese Weise ist bei einer zentralen Anströmung gewährleistet, dass der Innenkanal keinen Strömungswiderstand darstellt und turbulente Strömungen vermieden werden.

Gemäß einer weiteren Ausgestaltung hat das Gehäuse einen Flansch, wobei die Lagervorrichtung der Welle über eine Wärmebrücke mit dem Flansch verbunden ist. Der Flansch dient insbesondere zur Montage des Gehäuses an einen Abgaskühler, wobei dieser naturgemäß eine deutlich reduzierte Temperatur gegenüber dem Abgasstromes aufweist, der das Gehäuse durchströmt. Durch die Bildung einer Wärmebrücke zwischen der Lagervorrichtung und dem Flansch ist ein schneller Abtransport der in die Lagervorrichtung eingebrachte Wärme (beispielsweise über die Welle oder das Abgas direkt) sichergestellt. Dies führt zu einer deutlich erhöhten Lebensdauer in Hinblick auf die Funktionalität des Lagers. Die Lebensdauer kann zusätzlich durch die Verwendung einer Graphitschmierung oder aber eines Graphit enthaltenden Lagersitzes gesteigert werden.

Gemäß noch einer weiteren Ausgestaltung ist ein Durchmesser der Strömungsleitung in Strömungsrichtung eines durchströmenden Fluid kleiner oder gleich einem angrenzenden Öffnungsdurchmesser eines angrenzenden Bauteils. Auf diese Weise werden sogenannte Abrisskanten am Umfang der Strömungsleitung vermieden, welche zu einer turbulenten Strömung des Fluids führen würden. Eine solche turbulente Strömung hätte zur Folge, dass eine exakte Steuerung bzw. Regulierung des Fluidstromes nicht mehr gewährleistet wäre. Dabei gelten die gerade beschriebenen Beziehungen bei einer Anordnung des Ventilkomponentensatzes stromaufwärts des angrenzenden Bauteils (zum Beispiel eines Abgaskühlers). Ist der Ventilkomponentensatz stromabwärts des angrenzenden Bauteils angeordnet, so ist der Außendurchmesser der Strömungsleitung in Strömungsrichtung des durchströmenden Fluids größer oder gleich dem angrenzenden Öffnungsdurchmesser des angrenzenden Bauteils ausgeführt. Auf diese Weise wird vermieden, dass Teile des stromabwärts angeordneten Bauteils in den freien Strömungsquerschnitt der Strömungsleitung hineinragen und zur Verwirbelung des Fluids führen.

Betrachtet man die Anordnung der Klappe quer zur Strömungsrichtung, so wird zwischen der Klappe und dem Mantelrohr des Innenkanals ein Ringspalt gebildet, der seinen Ursprung insbesondere in der nachträglichen Positionierung der Klappe in dem Mantelrohr hat. Dies hat nämlich zur Folge, dass die Klappe gegenüber dem Mantelrohr mit ausreichend großen Montagetoleranzen versehen werden muss, so dass eine exakte Positionierung der Klappe gegenüber dem Mantelrohr innerhalb vorgebbarer Grenzen gewährleistet ist. Der Ringspalt ist dabei vorteilhafterweise so ausgebildet, dass nur eine Bypass-Strömung von weniger als 5 %, insbesondere weniger 3 %, bevorzugt sogar kleiner 1% des in das Gehäuse einströmenden Fluides erlaubt wird, das folglich größtenteils durch die Strömungsleitung hindurchströmt.

Bei einer Anordnung der Klappe quer zur Strömungsrichtung wird das Ziel verfolgt, eine Durchströmung des Fluids durch den Innenkanal zu verhindern. Der Ringspalt hat jedoch zur Folge, dass dennoch eine Bypass-Strömung durch den Innenkanal hindurchströmt. Werden jedoch maximale Bypass-Strömungen von 5 % gewährleistet, so lassen sich in Hinblick auf die Durchströmung eines Abgaskühlers immer noch sehr exakt vorgebbare Temperaturbereiche des gekühlten Abgasstromes erzielen, ohne die Effektivität des Abgaskühlers spürbar zu beeinträchtigen.

Zur Erzielung einer solch begrenzten Bypass-Strömung ist es vorteilhaft, dass der Ringspalt eine Breite hat, die kleiner als 0,5 mm ist, bevorzugt kleiner als 0,3 mm und insbesondere kleiner als 0,15 mm. Dabei ist insbesondere die breiteste Stelle des Ringspalts gemeint, falls eine exakte zentrische Anordnung der Klappe zu dem Mantelrohr nicht erreicht werden kann.

Gemäß noch einer weiteren Ausgestaltung weist die Klappe eine Fläche auf, die gegenüber dem Querschnitt des Innenkanals verschieden ist. Hierbei ist sowohl der Flächeninhalt, also die Größe der Fläche, sowie auch die Form oder äußere Gestalt der Fläche gemeint. So ist es beispielsweise vorteilhaft, bei einem kreisrunden Querschnitt des Innenkanals die Klappe mit einer ovalen Fläche auszuführen, wobei die Klappe in der verschließenden Stellung nicht senkrecht zur Strömungsrichtung ausgerichtet ist, sondern mit dieser einen anderen Winkel bildet. Dies hat zur Folge, dass unter Umständen ein sehr kleiner Ringspalt gebildet ist, der bevorzugt nicht umläuft, sondern durch mehrere Bereiche unterbrochen wird, indem die Klappe an dem Mantelrohr anliegt. Das hat weiterhin den Vorteil, dass der verbleibende Ringspalt nicht direkt angeströmt werden kann, und somit eine unerwünschte Bypass-Strömung nahezu vermieden wird.

Gemäß noch einer weiteren Ausgestaltung ist die Welle mit einem Antrieb so verbunden, dass die Welle mittels des Antriebes frei rotierbar ist. Das hat zur Folge, dass die Klappe in beliebig wählbaren Positionen fixiert werden kann, so dass neben der geschlossenen Stellung, in der nahezu keine Bypass-Strömung stattfindet, und einer geöffneten Stellung, in der ein möglichst großer Anteil der Bypass-Strömung durch den Innenkanal strömt, auch jede weitere Zwischenstellung der Klappe einstellbar ist. Die hieraus resultierenden unterschiedlichen Strömungsverhältnisse im Inneren eines Abgaskühlers erlauben eine exakte Anpassung der Temperatur des rückgeführten Abgases an die aktuell vorliegenden Bedingungen im Brennraum der Verbrennungskraftmaschine.

Gemäß noch einer weiteren Ausgestaltung weist die Lagervorrichtung und/oder das Gehäuse eine Dichtung auf, welche vorzugsweise aus Graphit hergestellt ist und die Strömungsleitung gegenüber der Umgebung außerhalb des Gehäuses abdichtet. Graphit hat sich überraschenderweise als Dichtmittel herausgestellt, obwohl bislang davon ausgegangen wurde, dass Graphit nur eine thermische Stabilität bis ca. 450 °C aufweist. Ein Einsatz als Dichtmittel im Abgassystem wurde bislang nicht in Betracht gezogen, da sich wegen des das Gehäuse durchströmenden Abgases thermische Beanspruchungen bis ca. 700 °C ergeben. Ein Grund dafür, dass eine Dichtung, die zumindest teilweise aus Graphit (insbesondere Graphitfolie) besteht, bei derartig hohen Temperaturen ihre Funktionalität beibehält, ist in dem hohen Inertgas-Anteil des vorbeiströmenden Abgases zu sehen. Gelangt das heiße Abgas zur Dichtstelle oder zur Lagerung so hat der Kontakt mit dem Graphit eine erhöhte thermische Stabilität des Graphits zur Folge. Ist die Dichtung beispielsweise mit einer Graphitfolie gebildet, welche zu einem Ring geformt ist und über die Achse gestülpt wird. Dabei wird dieser Ring mit Graphitfolie vorzugsweise mittels der Lagervorrichtung gegen einen Anschlag des Gehäuses gedrückt, so dass es zu einer Verformung der Graphitfolie bzw. des Ringes kommt. Diese Verformung wirkt nun wie eine Art Labyrinthdichtung, so dass ein Ausströmen des Abgases aus dem Gehäuse in die Umgebung dauerhaft verhindert wird. Die Graphit-Dichtung steht nun von einer Seite mit dem nahezu sauerstofflosen Abgas in Kontakt, während auf der anderen Seite durch die Hülse und dem erhöhtem Druck in der Abgasanlage ein schädliches Eindringen von Luft vermieden wird.

Gemäß noch einer weiteren Ausgestaltung weist das Gehäuse einen Zugang auf, der so gestaltet ist, dass mindestens 75 %, insbesondere mindestens 85 %, bevorzugt mehr als 95 % eines in das Gehäuse einströmenden Fluids in den Innenkanal strömt, wenn die Klappe in Strömungsrichtung angeordnet ist. Eine solche Ausgestaltung des Zugangs ist insbesondere dann vorteilhaft, wenn das Gehäuse stromaufwärts eines Abgaskühlers angeordnet ist. Somit ist gewährleistet, dass das Fluid nahezu ausschließlich durch den Innenkanal strömt, wenn die Klappe in der geöffneten Stellung ist. Die Klappe und die Welle sind dabei so in Strömungsrichtung angeordnet, dass sie einen möglichst kleinen Strömungswiderstand darstellen, und insbesondere auch beim Vorbeiströmen des Fluids eine möglichst laminare Strömung beibehalten wird.

Gemäß noch einer weiteren Ausgestaltung des Ventilkomponentensatzes ist die Welle nur über eine Lagervorrichtung mit dem Gehäuse verbunden. Das bedeutet, dass sich die Welle nicht über den gesamten Strömungsquerschnitt bzw. Außendurchmesser der Strömungsleitung erstreckt, wobei die Welle und die Klappe vorzugsweise einstückig, insbesondere aus einem Material, hergestellt sind. Die Halterung bzw. Befestigung der Welle erfolgt nur noch an einem Punkt im Gehäuse, während das andere Ende der Welle frei ist. Die Welle erstreckt sich dabei bevorzugt über den Querschnitt des Innenkanals, so dass diese auch zwei Nuten hat, die zur Ausrichtung gegenüber dem Innenkanal dienen. Eine solche Ausführung der Ventilwelle mit Klappe hat die Vorteile, dass die Herstellung aufgrund des Weglassens der zweiten Lagerung preiswerter wird, außerdem wird der durch die Welle erzeugte Strömungswiderstand reduziert.

Die Erfindung wird nachfolgend anhand der Zeichnungen näher erläutert, wobei diese lediglich vorteilhafte und besonders bevorzugte Ausführungsformen darstellen. Die Erfindung ist nicht auf die dargestellten Ausführungsbeispiele beschränkt. Es zeigen schematisch:
- Fig. 1: perspektivisch eine erste Ausführungsform des Ventilkomponentensatzes im montierten Zustand,
- Fig. 2: eine weitere Ansicht der Ausführungsform aus Fig 1,
- Fig. 3: schematisch und perspektivisch eine Detailansicht einer Ausführungsform des Ventilkomponentensatzes,
- Fig. 4: eine Detailansicht einer Ausführungsform des Ventilkomponentensatzes in der geschlossenen Position;
- Fig. 5: die Ausführungsform aus Fig. 4 in einer geöffneten Position;
- Fig. 6: eine Schnittansicht einer weiteren Ausführungsform des Ventilkomponentensatzes und
- Fig. 7: eine Schnittansicht einer weiteren Ausführungsform eines Ventilkomponentensatzes mit verkürzter Welle.

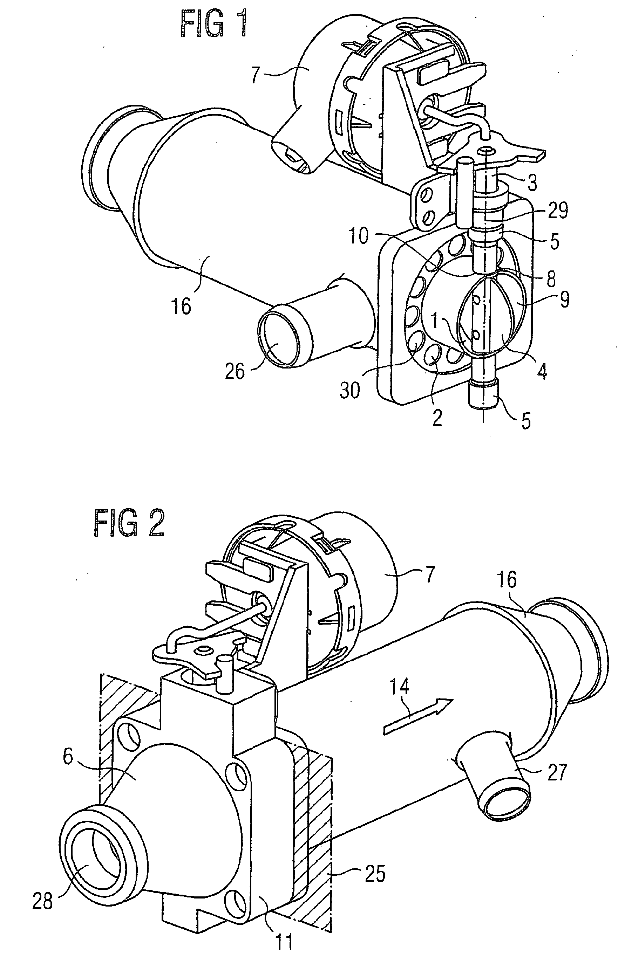

Figur 1 zeigt schematisch und perspektivisch eine erste Ausführungsform des erfindungsgemäßen Ventilkomponentensatzes zum Verschließen eines Innenkanals 1, der in einer Strömungsleitung 2 angeordnet ist. In der dargestellten Ausführungsform wird die Strömungsleitung 2 in eine Mehrzahl von Teilströmungen unterteilt. Der Ventilkomponentensatz zeichnet sich dadurch aus, dass dieser eine mit einer Welle 3 verbundene Klappe 4, eine Lagervorrichtung 5 und ein Gehäuse 6 (nicht dargestellt) umfasst, wobei die Welle 3 Mittel zur Positionierung der Klappe 4 gegenüber dem Innenkanal 1 aufweist. Der Innenkanal 1 ist in der dargestellten Ausführungsform im wesentlichen konzentrisch zur Strömungsleitung 2 angeordnet.

Als Mittel zur Positionierung weist die Welle 3 zwei Nuten 8 auf, die zur Aufnahme eines den Innenkanal 1 umgebenden Mantelrohres 9 geeignet sind. Das Mantelrohr 9 weist hierbei zwei Aussparungen 10 auf, die als Langlöcher ausgeführt sind, wobei die Aussparungen 10 jeweils in eine Nut 8 der Welle 3 eingreifen. Auf diese Weise ist sichergestellt, dass die Klappe 4 zentrisch zum Innenkanal 1 bzw. dem Mantelrohr 9 ausgerichtet ist. Die Nuten 8 dienen somit auch zur Justierung der Klappe 4 in Richtung einer Achse 29, indem die Nuten 8 in die Aussparungen 10 eingreifen. Die Ausführung der Aussparungen 10 als Langlöcher hat zudem den Vorteil, dass ein unterschiedliches thermisches Ausdehnungsverhalten des Mantelrohres 9 und der Ventilkomponentensatzes in dieser Verbindungsstelle zumindest teilweise kompensiert werden kann. Somit können insbesondere thermische Spannungen in dieser Verbindungsstelle zumindest in Richtung der Längsachse der Langlöcher bzw. in Strömungsrichtung 14 des Fluides reduziert oder sogar vermieden werden. Dies gewährleistet die Funktionstüchtigkeit des Ventilkomponentensatzes auch bei eines thermischen Wechselbeanspruchung, wie sie beispielsweise in der Abgasrückführungsleitung eines Automobils auftritt.

Der Ventilkomponentensatz mit einem stromabwärts angeordneten Bauteil 16 (Abgaskühler) verbunden. Das als Abgaskühler ausgeführte Bauteil 16 ist von einem Kühlmittel durchströmbar, wobei in der Darstellung eine Kühlmittelzufuhr 26 zu erkennen ist, die nahe dem Ventilkomponentensatz angeordnet ist. Die Zufuhr des Kühlmittels nahe der Einströmseite gewährleistet einen großen Temperaturunterschied des Kühlmediums (Wasser, Luft oder dergleichen) gegenüber dem noch sehr heißen Abgas, so dass eine rasche Abkühlung sichergestellt ist.

Die Klappe 4 ist über die Welle 3 mit einem Antrieb 7 so verbunden, dass jede beliebige Position der Klappe 4 in bezug auf die Strömungsrichtung 14 (nicht dargestellt) des durchströmenden Fluids ermöglicht wird. Vorliegend ist die Klappe 4 in der geöffneten Position dargestellt (parallel zur Strömungsrichtung 14), so dass das einströmende Fluid im wesentlichen durch den Innenkanal 1 strömt. Diese geöffnete Position der Klappe 4 wird bevorzugt in der Kaltstartphase eines Verbrennungsmotors eingenommen, so dass das Abgas den Abgaskühler ungekühlt durch den Innenkanal 1 durchströmt und der Verbrennungskraftmaschine im heißen Zustand zugeführt wird. Wird die Klappe 4 in eine geschlossene Position bewegt, so dass sie im wesentlichen senkrecht zur Strömungsrichtung 14 (nicht dargestellt) angeordnet ist und den Innenkanal 1 verschließt, strömt das Fluid nahezu vollständig durch die Strömungsleitung 2. Dabei steht das Fluid in intensivem Kontakt mit einem Mantel 30 des Abgaskühlers, wodurch eine effektive Kühlung des Abgases auf einen vorgebbaren Temperaturbereich gewährleistet ist.

Figur 2 zeigt schematisch und perspektivisch eine Seitenansicht eines Bauteiles 16 (Abgaskühler), der in Strömungsrichtung 14 gesehen dem Ventilkomponentensatz nachgeschaltet ist. Der Ventilkomponentensatz ist in einer Montageebene 25 mit dem Bauteil 16 über einen Flansch 11 des Gehäuses 6 bevorzugt lösbar (mit bekannten Verbindungsmitteln) verbunden. An dem Gehäuse 6 ist ein Antrieb 7 befestigt, der eine Rotation der Welle 3 (nicht dargestellt) bewirkt. In dem gezeigten Ausführungsbeispiel ist der Ventilkomponentensatz so angeordnet, dass das Fluid über einen Zugang 28 in das Gehäuse 6 eingeleitet wird, wobei die Art der Durchströmung des Bauteils 16 von der Position der Klappe 4 abhängt. Der Zugang 28 des Gehäuse 6 ist so gestaltet, dass mindestens 95 % eines in das Gehäuse 6 einströmenden Fluides in den Innenkanal 1 (nicht dargestellt) strömt, wenn die Klappe 4 (nicht dargestellt) in Strömungsrichtung 14 angeordnet ist (geöffnete Position) und somit den Innenkanal 1 (nicht dargestellt) freigibt. Das an den Ventilkomponentensatz angrenzende Bauteil 16 ist als Wärmetauscher, insbesondere Abgaskühler, ausgeführt, wobei das Bauteil 16 in einem stromabwärts gelegenen Abschnitt einen Kühlmittelauslaß 27 aufweist.

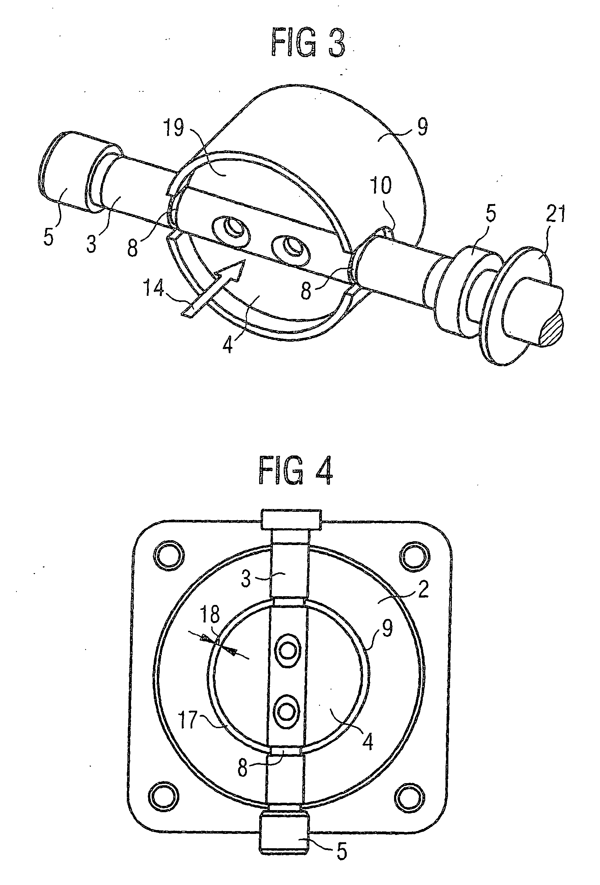

Figur 3 zeigt schematisch und perspektivisch eine Detailansicht, die die Positionierung der Welle 3 mit der Klappe 4 gegenüber dem Mantelrohr 9 verdeutlicht. Die Nuten 8 greifen dabei in die als Langlöcher ausgeführten Aussparungen 10 des Mantelrohres 9. Dabei ist zu erkennen, dass die Welle 3 nur in bestimmten Teilbereichen an dem Mantelrohr 9 anliegt und insbesondere in Strömungsrichtung 14 ein Spalt zwischen der Welle 3 und dem Mantelrohr 9 gebildet ist. Dieser ist vorzugsweise so zu wählen, dass eine Verschmutzung bzw. Verklebung verhindert wird, die die Rotation der Welle 3 behindern würde. Die Welle 3 ist über zwei Lagervorrichtungen 5 in einem Gehäuse 6 (nicht dargestellt) gelagert. Zur Positionierung der Welle gegenüber dem Mantelrohr 9 und dem Gehäuse 6 (nicht dargestellt) weist der Ventilkomponentensatz zusätzlich einen Sprengring 21 auf, der in bekannter Weise an einem Anschlag 22 (nicht dargestellt) des Gehäuses 6 (nicht dargestellt) fixiert wird. Die Klappe 4 kann nun beliebig rotieren, insbesondere in einem Winkel von 0° bis 90°, wobei diese Grenzwerte jeweils einen vollständig geöffneten und einen komplett verschlossenen Zustand darstellen. Dieser bevorzugte Rotationsbereich wird üblicherweise mittels installierter Endschalter begrenzt (mechanischer und/oder software-technischer Natur). Durch die Ausrichtung der Fläche 19 der Klappe 4 gegenüber der Strömungsrichtung 14 wird die Menge des den Innenkanal 1 sowie die Strömungsleitung 2 (nicht dargestellt) durchströmenden Fluids geregelt.

Figur 4 zeigt eine Detailansicht einer Ausführungsform des Ventilkomponentensatzes, wobei die Klappe 4 in der geschlossenen Position dargestellt ist. Zwischen der Klappe 4 und dem Mantelrohr 9 wird ein Ringspalt 17 gebildet, der nur eine Bypass-Strömung durch den Innenkanal 1 (nicht dargestellt) von weniger als 3 % erlaubt. Der überwiegende Teil des durchströmenden Fluids strömt in dieser geschlossenen Position durch die Strömungsleitung 2. Dabei weist der Ringspalt 17 eine Breite 18 auf, die bevorzugt kleiner als 0,3 mm ist.

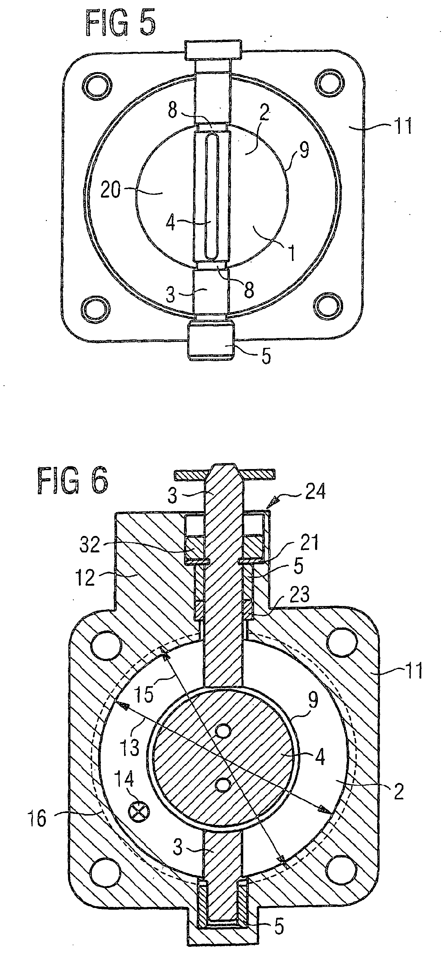

Figur 5 zeigt eine Detailansicht einer weiteren Ausführungsform des Ventilkomponentensatzes. Die Welle 3 ist nun so gedreht, dass die Klappe 4 einen größtmöglichen Querschnitt 20 des Innenkanals 1 freigibt, und nahezu der gesamte Fluidstrom durch den Innenkanal 1 hindurchströmt. In dieser Darstellung sind auch die zwei Nuten 8 deutlich zu erkennen, die zur Positionierung der Klappe 4 gegenüber dem Innenkanal 1 bzw. dem Mantelrohr 9 dienen.

Figur 6 zeigt schematisch und in einer Schnittansicht eine weitere Ausführungsform eines Ventilkomponentensatzes. Die Welle 3 ist über die Lagervorrichtungen 5 in dem Gehäuse 6 gelagert. Zumindest nahe einer Lagervorrichtung 5 ist eine Dichtung 23 angeordnet, die vorzugsweise aus Graphit hergestellt ist und die Strömungsleitung 2 gegenüber der Umgebung 24 außerhalb des Gehäuses 6 abdichtet. Die Dichtung 23 wird mittels der Lagervorrichtungen 5 gegen das Gehäuse 5 verpresst und dabei bevorzugt auch etwas verformt bzw. gestaucht um sicherzustellen, dass eine möglichst vollständige Abdichtung erfolgt. Mit etwas axialem Spiel wird die Lagervorrichtung 5 mittels einem Sprengring 21 gesichert, wobei der Sprengring 21 gegen einen Anschlag 22 des Gehäuses 6 gepresst wird. Zusätzlich ist wird die Lagervorrichtung 5 und die Dichtung 23 von einer Buchse 32 geschützt. Diese gewährleistet beispielsweise, dass eine Dichtung 23 aus Graphit bis zu Temperaturen von 1300°C beständig bleibt, da ein Kontakt des Graphits mit Sauerstoff der Luft vermieden wird.

Das Gehäuse 6 hat einen Flansch 11, der mit der Lagervorrichtung 5 über eine Wärmebrücke 12 verbunden ist. Die Wärmebrücke 12 zeichnet sich durch eine besonders gute Wärmeleitfähigkeit aus, so dass die über die Welle in die Lagervorrichtung 5 eingebrachte Wärme des Abgases schnell abgeführt wird und somit die Langlebigkeit der Lagervorrichtung 5 gewährleistet ist. Dies wird insbesondere dadurch verstärkt, dass das angrenzende Bauteil 16 (angedeutet durch gestrichelte Linien) eine im vergleich zum Abgas deutlich geringere Temperatur aufweist. Dabei ist zu gewährleisten, dass die Wärmebrücke 12 bzw. der Flansch 11 Temperaturen aufweisen, die deutlich unterhalb von 350°C, insbesondere unter 250°C und besonders bevorzugt unter 150°C während des gesamten Betriebes liegen.

Der Ventilkomponentensatz ist stromaufwärts des angrenzenden Bauteils 16 angeordnet, so dass das Abgas zunächst durch das Gehäuse 6 und anschließend durch das Bauteil 16 hindurchströmt. Dabei weist die Strömungsleitung 2 einen Außendurchmesser 13 auf, der kleiner oder gleich einem angrenzenden Öffnungsdurchmesser 15 des angrenzenden Bauteils 16 ist. Auf diese Weise werden Strömungskanten vermieden, die zur Verwirbelung des durchströmenden Fluids führen würden. Um eine besonders gute Anströmung der Strömungsleitung 2 bei geschlossener Position der Klappe 4 zu bewirken, kann es unter Umständen vorteilhaft sein, in dem Zugang 28 (nicht dargestellt) des Gehäuses 6 Leitstrukturen anzuordnen, die im Bedarfsfall eine Strömungsumlenkung von zentralen Bereichen des Zugangs 28 (nicht dargestellt) hin zu der außenliegenden, ringförmig ausgebildeten Strömungsleitung 2 ermöglichen. Somit könnten der Staudruck im Inneren des Gehäuses bzw. die turbulenten Eigenschaften des durchströmenden Fluids reduziert werden.

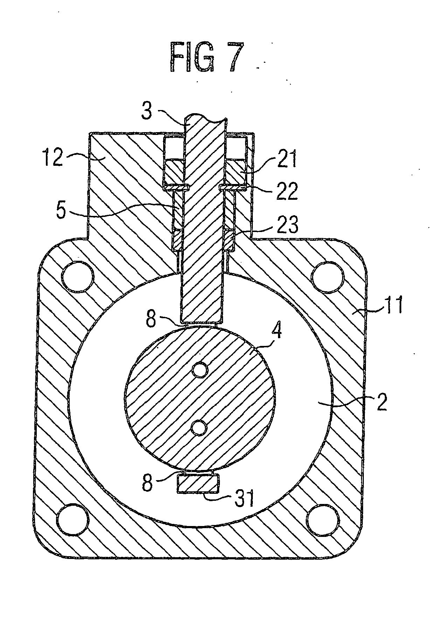

Fig. 7 zeigt schematisch ein weiteres Ausführungsbeispiel des Ventilkomponentensatzes, wobei die Welle 3 nur über eine Lagervorrichtung 5 mit dem Gehäuse 6 verbunden ist. Die Halterung bzw. Befestigung der Welle 3 erfolgt nur noch in einem Bereich des Gehäuses 6, während das andere Ende 31 der Welle 3 frei ist. Die Welle 3 erstreckt sich dabei über den Querschnitt 20 des Innenkanals 1, so dass diese auch zwei Nuten 8 hat, die zur Ausrichtung gegenüber dem Mantelrohr 9 des Innenkanals 1 dienen. Eine solche Ausführung der Ventilwelle mit Klappe 4 hat den Vorteil, dass die Herstellung aufgrund des Weglassens der zweiten Lagervorrichtung (nicht dargestellt) preiswerter wird. Außerdem wird der durch die Welle 3 erzeugte Strömungswiderstand reduziert. Die Welle 3 und die Klappe 4 sind dabei einstückig hergestellt, insbesondere wurden sie aus dem gleichen Material und in einem Verfahrensschritt gesintert.

Somit ist ein Ventilkomponentensatz angegeben, der auch nachträglich exakt zu einem anschließenden Bauteil ausgerichtet werden kann, wobei die bevorzugte Ausgestaltung mit mindestens einer zum Innenkanal 1 passenden Nut 8 auf der Welle 3 besonders preiswert herstellbar ist.

### Bezugszeichenliste

- 1: Innenkanal
- 2: Strömungsleitung
- 3: Welle
- 4: Klappe
- 5: Lagervorrichtung
- 6: Gehäuse
- 7: Antrieb
- 8: Nut
- 9: Mantelrohr
- 10: Aussparung
- 11: Flansch
- 12: Wärmebrücke
- 13: Außendurchmesser
- 14: Strömungsrichtung
- 15: Öffnungsdurchmesser
- 16: Bauteil
- 17: Ringspalt
- 18: Breite
- 19: Fläche
- 20: Querschnitt
- 21: Sprengring
- 22: Anschlag
- 23: Dichtung
- 24: Umgebung
- 25: Montageebene
- 26: Kühlmittelzufuhr
- 27: Kühlmittelauslass
- 28: Zugang
- 29: Achse
- 30: Mantel
- 31: Ende
- 32: Buchse

## Patentansprüche

1. Ventilkomponentensatz zum Verschließen eines Innenkanals (1), der in einer Strömungsleitung (2) angeordnet ist, mit einer Klappe (4), die mit einer Welle (3) verbunden ist, mit einer Lagervorrichtung (5) für die Welle (3) und mit einem Gehäuse (6), wobei die Welle (3) Mittel zur Positionierung der Klappe (4) gegenüber dem Innenkanal (1) aufweist, **dadurch gekennzeichnet, dass** die Welle (3) als Mittel zur Positionierung mindestens eine Nut (8) aufweist, die zur Aufnahme eines den Innenkanal (1) umgebenden Mantelrohres (9) geeignet ist, wobei das Mantelrohr (9) mindestens eine Aussparung (10), insbesondere ein Langloch, aufweist, welche in die mindestens eine Nut (8) der Welle (3) eingreifen kann.

2. Ventilkomponentensatz nach Anspruch 1, **dadurch gekennzeichnet, dass** der Innenkanal (1) zur Strömungsleitung (2) im Wesentlichen konzentrisch angeordnet ist.

3. Ventilkomponentensatz nach einem der vorhergehenden Ansprüche, **dadurch gekennzeichnet, dass** das Gehäuse (6) einen Flansch (11) hat, wobei die Lagervorrichtung (5) der Welle (3) über eine Wärmebrücke (12) mit dem Flansch (11) verbunden ist.

4. Ventilkomponentensatz nach einem der vorhergehenden Ansprüche, **dadurch gekennzeichnet, dass** ein Außendurchmesser (13) der Strömungsleitung (2) in Strömungsrichtung (14) eines durchströmenden Fluides kleiner oder gleich einem angrenzenden Öffnungsdurchmesser (15) eines angrenzenden Bauteils (16) ist.

5. Ventilkomponentensatz nach einem der vorhergehenden Ansprüche, wobei in einer Anordnung der Klappe (4) quer zur Strömungsrichtung (14) zwischen der Klappe (4) und dem Mantelrohr (9) des Innenkanals (1) ein Ringspalt (17) gebildet wird, d**adurch gekennzeichnet, dass** der Ringspalt (17) nur eine Bypass-Strömung von weniger als 5%, insbesondere weniger 3%, des Fluides erlaubt, welches durch die Strömungsleitung (2) hindurchströmt.

6. Ventilkomponentensatz nach Anspruch 5, **dadurch gekennzeichnet, dass** der Ringspalt (17) eine Breite (18) hat, die kleiner als 0,5 mm ist, bevorzugt sogar kleiner als 0,3 mm.

7. Ventilkomponentensatz nach einem der vorhergehenden Ansprüche, **dadurch gekennzeichnet, dass** die Klappe (4) eine Fläche (19) aufweist, die gegenüber einem Querschnitt (20) des Innenkanals (1) verschieden ist.

8. Ventilkomponentensatz nach einem der vorhergehenden Ansprüche, **dadurch gekennzeichnet, dass** die Welle (3) mit einem Antrieb (7) so verbunden ist, dass die Welle (3) mittels des Antriebes (7) frei rotierbar ist.

9. Ventilkomponentensatz nach einem der vorhergehenden Ansprüche, **dadurch gekennzeichnet, dass** die Lagervorrichtung (5) und/oder das Gehäuse (6) eine Dichtung (23) umfasst, welche vorzugsweise aus Graphit hergestellt ist und die Strömungsleitung (2) gegenüber der Umgebung (24) außerhalb des Gehäuses (6) abdichtet.

10. Ventilkomponentensatz nach einem der vorhergehenden Ansprüche, **dadurch gekennzeichnet, dass** das Gehäuse (6) einen Zugang (28) aufweist, der so gestaltet ist, dass mindestens 75%, insbesondere mindestens 85%, bevorzugt mehr als 95% eines in das Gehäuse (6) einströmenden Fluides in den Innenkanal (1) strömt, wenn die Klappe (4) in Strömungsrichtung (14) angeordnet ist.

11. Ventilkomponentensatz nach einem der vorhergehenden Ansprüche, **dadurch gekennzeichnet, dass** die Welle (3) nur über eine Lagervorrichtung (5) mit dem Gehäuse (6) verbunden ist.

## Claims

1. Valve assembly for closing an inner duct (1), which is arranged in a flow line (2), having a flap (4), which is connected to a shaft (3), a bearing device (5) for the shaft (3) and a housing (6), the shaft (3) having means for positioning the flap (4) in relation to the inner duct (1), **characterized in that** the shaft (3), as means of positioning, has at least one slot (8), which is suitable for receiving a casing pipe (9) surrounding the inner duct (1), the casing pipe (9) having at least once recess (10), in particular an elongated hole, which is capable of engaging in at least one slot (8) in the shaft (3).

2. Valve assembly according to Claim 1, **characterized in that** the inner duct (1) is basically arranged concentrically with the flow line (2).

3. Valve assembly according to either of the preceding Claims, **characterized in that** the housing (6) has a flange (11), the bearing device (5) for the shaft (3) being connected to the flange (11) by way of a thermal bridge (12).

4. Valve assembly according to any one of the preceding Claims, **characterized in that** an outside diameter (13) of the flow line (2) in the direction of the flow (14) of a fluid flowing through it is smaller than or equal to an adjoining opening diameter (15) of an adjoining component (16).

5. Valve assembly according to any one of the preceding Claims, in which, in an arrangement of the flap (4) transversely to the direction of flow (14), an annular gap (17) is formed between the flap (4) and the casing pipe (9) of the inner duct (1), **characterized in that** the annular gap (17) only permits a bypass flow of less than 5%, in particular less than 3% of the fluid flowing through the flow line (2).

6. Valve assembly according to Claim 5, **characterized in that** the annular gap (17) has a width (18) of less than 0.5 mm and preferably even less than 0.3 mm.

7. Valve assembly according to any one of the preceding Claims, **characterized in that** the flap (4) has a surface (19), which is different from a cross section (20) of the inner duct (1) .

8. Valve assembly according to any one of the preceding Claims, **characterized in that** the shaft (3) is connected to a drive (7), so that the shaft (3) is freely rotatable by means of the drive (7).

9. Valve assembly according to any one of the preceding Claims, **characterized in that** the bearing device (5) and/or the housing (6) comprises a seal (23), which is preferably made of graphite and which seals off the flow line (2) from the surroundings (24) outside the housing (6).

10. Valve assembly according to any one of the preceding Claims, **characterized in that** the housing (6) has an entrance (28), which is designed so that at least 75%, in particular at least 85% and preferably more than 95% of a fluid flowing into the housing (6) flows into the inner duct (1) when the flap (4) is arranged in the direction of flow (14).

11. Valve assembly according to any one of the preceding Claims, **characterized in that** the shaft (3) is connected to the housing (6) by only one bearing device (5).

## Revendications

1. Ensemble soupape, permettant de fermer un canal intérieur (1) disposé dans une conduite d'écoulement (2) et comportant un clapet (4) fixé à un arbre (3), un système de suspension (5) pour l'arbre (3) et un boîtier (6), où l'arbre (3) comporte des moyens permettant de positionner le clapet (4) par rapport au canal intérieur (1), **caractérisé par le fait que** l'arbre (3) comporte, en tant que moyen de positionnement, au moins une gorge (8), qui est adaptée pour accueillir un tube fourreau (9) entourant le canal intérieur (1), le tube fourreau (9) comportant au moins un évidement (10), notamment un trou oblong, qui peut s'engager dans la au moins une gorge (8) de l'arbre (3).

2. Ensemble soupape selon la revendication 1, **caractérisé par le fait que** le canal intérieur (1) est disposé, pour l'essentiel, d'une façon concentrique par rapport à la conduite d'écoulement (2).

3. Ensemble soupape selon l'une des revendications précédentes, **caractérisé par le fait que** le boîtier (6) a une bride (11), le système de suspension (5) de l'arbre (3) étant lié à la bride (11) par un pont thermique (12).

4. Ensemble soupape selon l'une des revendications précédentes, **caractérisé par le fait qu'**un diamètre extérieur (13) de la conduite d'écoulement (2) est, dans la direction d'écoulement (14) d'un fluide qui la traverse, inférieur ou égal à un diamètre voisin (15) d'ouverture d'un module voisin (16).

5. Ensemble soupape selon l'une des revendications précédentes, où, dans une disposition du clapet (4) perpendiculairement à la direction d'écoulement (14), un interstice annulaire (17) se forme entre le clapet (4) et le tube fourreau (9) du canal intérieur (1), **caractérisé par le fait que** l'interstice annulaire (17) n'autorise qu'un écoulement de dérivation de moins de 5%, notamment moins de 3% du fluide qui traverse la conduite d'écoulement (2).

6. Ensemble soupape selon la revendication 5, **caractérisé par le fait que** l'interstice annulaire (17) a une largeur (18) inférieure à 0,5 mm, préférentiellement même, inférieure à 0,3 mm.

7. Ensemble soupape selon l'une des revendications précédentes, **caractérisé par le fait que** le clapet (4) a une surface (19) qui diffère de la section transversale (20) du canal intérieur (1).

8. Ensemble soupape selon l'une des revendications précédentes, **caractérisé par le fait que** l'arbre (3) est lié à un système d'entraînement (7) de telle manière que l'arbre (3) peut tourner librement sous l'effet du système d'entraînement (7) .

9. Ensemble soupape selon l'une des revendications précédentes, **caractérisé par le fait que** le système de suspension (5) et / ou le boîtier (6) comprennent un joint (23), qui est fabriqué, d'une façon préférentielle, en graphite et qui assure l'étanchéité de la conduite d'écoulement (2) par rapport à l'environnement (24) à l'extérieur du boîtier (6).

10. Ensemble soupape selon l'une des revendications précédentes, **caractérisé par le fait que** le boîtier (6) comporte une entrée (28) configurée de manière telle que au moins 75%, notamment au moins 85%, préférentiellement plus de 95% d'un fluide entrant dans le boîtier (6) s'écoulent dans le canal intérieur (1), lorsque le clapet (4) est disposé dans la direction de l'écoulement (14).

11. Ensemble soupape selon l'une des revendications précédentes, **caractérisé par le fait que** l'arbre (3) n'est lié au boîtier (6) que par un seul système de suspension (5).
